# EUROPEAN PATENT SPECIFICATION

(11) **EP 1 191 001 B1**
(45) Date of publication and mention of the grant of the patent: **17.05.2006**
(21) Application number: 01307739.1
(22) Date of filing: 11.09.2001
(51) Int. Cl.: C04B 35/52, C04B 41/53, B23B 27/14, B23B 27/20, E21B 10/60

(54) **Rotary drill bit design method**
Entwurfsverfahren für eine Rotationsbohrerspitze
Procédé pour dresser une mèche rotative

(30) Priority: 20.09.2000 US 234075 P; 02.04.2001 US 281054 P
(43) Date of publication of application: 27.03.2002
(73) Proprietor: Camco International (UK) Limited, Stonehouse, Gloucestershire GL10 3RQ (GB)
(72) Inventor: Griffin, Nigel Dennis, Stonehouse , Gloucestershire GL103UB (GB); Hughes, Peter Raymond, Stroud, Gloucestershire GL5 4SG (US); Matthias, Terry R., Gloucestershire GL4 8HA (GB)
(74) Representative: Bailey, Richard Alan

(56) References cited:
- EP-A- 0 546 725
- WO-A-00/28106

## Description

This invention relates to a method of designing a fixed cutter rotary drill bit for use in the drilling of wellbores.

It is known that certain parts of a fixed cutter rotary drill bit wear at a faster rate than other parts thereof. Such variations in wear have been countered, in the past, by providing the drill bit with additional cutters in the high wear areas thereof. In the past, drill bit designs were compromised because cutters having high abrasion resistance had low impact toughness and cutters having high impact toughness had low abrasion resistance. As a result of this trade-off such placement of the cutters may improve the abrasion resistance of the drill bit, but it is likely that the overall drilling efficiency is not optimized due to relatively poor impact toughness.

EP 0546725 describes a fixed cutter rotary drill bit comprising a bit body upon which a plurality of cutters are mounted. The cutters used each include regions of relatively high impact resistance and regions of relatively low impact resistance.

It is an object of the invention to provide a drill bit whereby the operating efficiency of the bit can be maintained whilst providing a bit having a desired wear profile, and to provide a method for designing such a drill bit and provide high abrasion resistance while maintaining impact toughness.

According to the present invention there is provided a method for designing a fixed cutter rotary drill bit having at least one cutter of a first type of a relatively low abrasion resistance and at least one cutter of a second type of a relatively high abrasion resistance the method comprising determining a layout of cutter locations in which cutters are to be positioned upon a bit body, determining the likely wear rate for at least the cutters provided in some of the cutter locations and using the determined likely wear rates to determine whether to mount a cutter of the first type or a cutter of the second type in each cutter location, wherein the first type of cutters has substantially the same impact toughness as the second type of cutters.

The method of the invention is advantageous in that the positions of the cutter locations can be optimised whilst achieving an acceptable overall wear rate for the bit.

The cutters of the second type conveniently each comprise a table of polycrystalline diamond bonded to a substrate, the table of polycrystalline diamond defining a matrix of interstices containing a catalysing material, the interstices of the matrix located within a volume close to a working surface of the cutter being substantially free of catalysing material. The volume preferably extends to a depth of at least around 0.25mm from the working surface.

According to another aspect of the invention there is provided a method of designing a fixed cutter rotary drill bit having at least one cutter of a first type having a relatively low abrasion resistance and at least one cutter of a second type having a relatively high abrasion resistance, the method comprising determining a layout of cutter locations in which cutters are to be positioned upon a bit body, determining a likely wear rate for at least the cutters provided at some of the cutter locations, selecting a desired wear profile for the bit, and using the determined likely wear rates to determine the abrasion resistance of the cutter to be mounted at each cutter location to achieve the desired wear profile, wherein all the cutters have substantially the same impact toughness.

The invention also relates to a fixed cutter drill bit designed in accordance with the methods defined hereinbefore.

The invention will further be described, by way of example, with reference to the accompanying drawings.
Figure 1 is a perspective view of a drill bit designed in accordance with an embodiment of the invention.
Figure 2 is a diagrammatic sectional view of a cutter of the drill bit of Figure 1.
Figure 3 is a diagrammatic view illustrating the structure of part of the cutters of Figure 2.
Figures 4 to 7 are diagrammatic representations of wear profiles.
Figures 8 and 9 are diagrammatic views of two further drill bits.

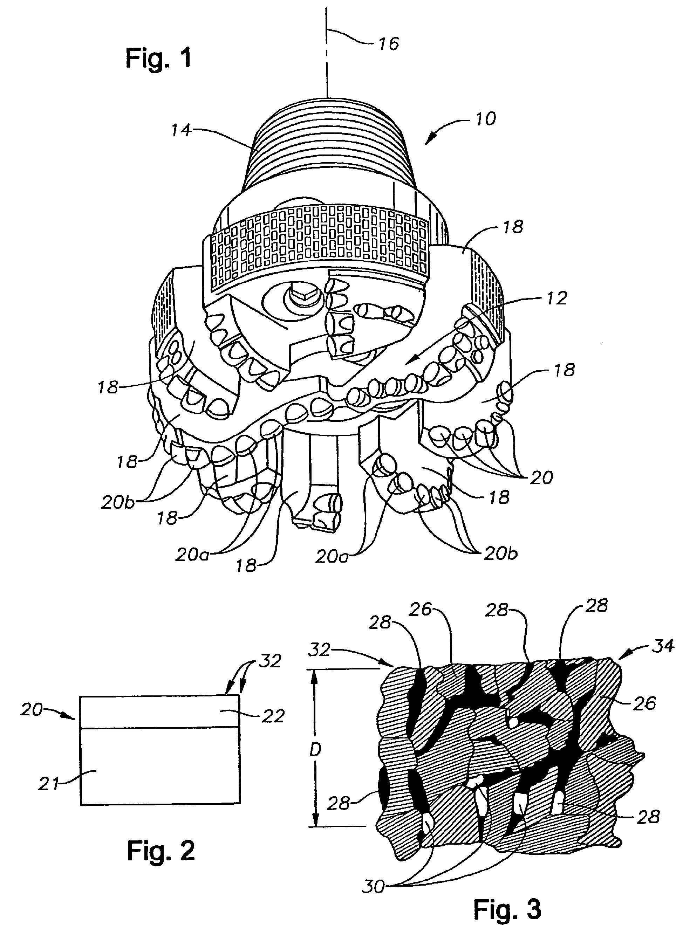

The fixed cutter drill bit illustrated in Figure 1 comprises a bit body 10 having a leading face 12 and a shank 14 to permit the drill bit to be secured to the remainder of a drill string. The bit body 10 is intended to be rotated, in use, about an axis of rotation 16.

Upstanding from the leading face 12 are a plurality of blades 18 upon which a plurality of cutters 20 are mounted. As shown in Figure 2, each cutter 20 comprises a table 22 of polycrystalline diamond bonded to a tungsten carbide substrate 24. Each cutter 20 is manufactured using a known technique involving exposing diamond powder, a catalyst material and a tungsten carbide substrate to high temperature, high pressure conditions to cause the diamond powder to undergo a structural change, becoming polycrystalline diamond, and to cause the polycrystalline diamond to bond to the substrate.

It has been found that where the catalyzing material used in the manufacture of the cutters is cobalt, removal of the catalyst material from a part of the cutter close to a working surface thereof results in the abrasion resistance of the cutter improving. Figure 3 illustrates part of a cutter so treated. In Figure 3, the polycrystalline diamond 26 defines a matrix of interstices 28 containing the catalyzing material used in the formation of the polycrystalline diamond and used in the bonding of the polycrystalline diamond to the substrate. The interstices 28 located within a volume 34 close to a working surface 32 of the diamond 26 have been rendered substantially free of catalyzing material 30 by leaching the catalyzing material 30 from the volume 34. In the arrangement of Figure 3, the volume 34 extends over the full cross-sectional area of the polycrystalline diamond, and extends to a depth D of approximately 0.25mm from the working surface 32.

Although leaching is the currently preferred technique for rendering the interstices free of catalyzing material, other techniques may be used. For example, the catalyzing material may be forced to undergo a structural change to take an alternative form which does not have a catalyzing effect, or may be chemically reacted to form a substance which does not have a catalyzing effect.

In accordance with the invention, a layout or arrangement of cutter locations in which the cutters 20 are to be mounted on the bit body 10 is chosen, and the likely wear rate to which each of the cutters 20 is to be exposed is determined. The likely wear rate for each location may be determined using, for example, a computer modelling technique, or alternatively may be derived from measurements taken from a similar, used drill bit. Using the determined likely wear rate information, either a cutter 20a of a first type of a relatively low abrasion resistance, or a cutter 20b of a second type having a relatively high abrasion resistance manufactured as described hereinbefore is chosen for each cutter location in order to achieve a desired wear profile.

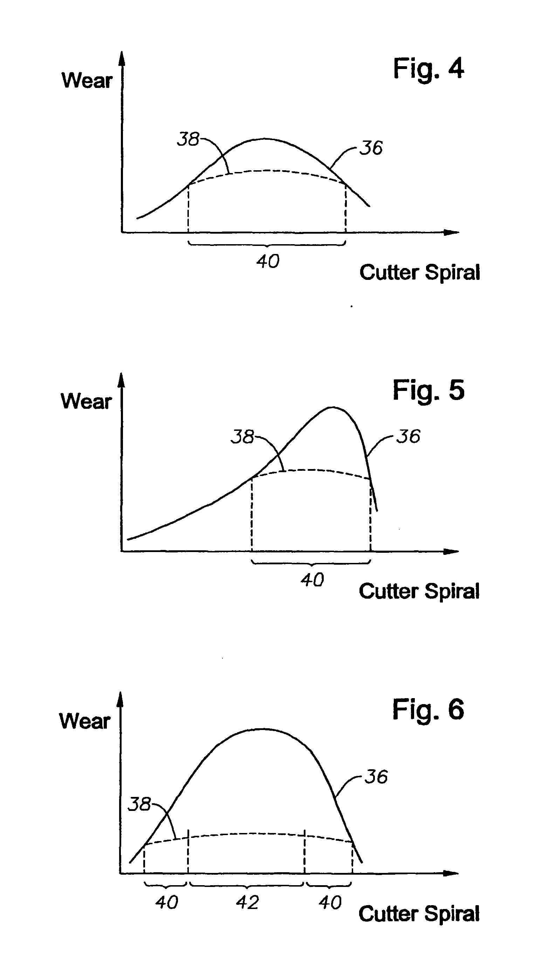

Figures 4 to 7 illustrate a range of possible profiles. In each drawing, the full line 36 denotes the profile that would be achieved if all cutter locations were occupied by cutters 20a of the first type. In Figures 4 and 5, the broken line 38 illustrates the modification to the wear profile achieved by using cutters 20b of the second type rather than cutters 20a of the first type in a region 40 of the bit.

Figure 6 illustrates an arrangement which makes use of cutters of a third type of higher abrasion resistance than the cutters 20b of the second type. These cutters are similar to the cutters 20b of the second type but are treated to remove the catalyst material to a greater depth, for example to a depth of 0.5mm, from the working surface. In Figure 6, the cutters 20b of the second type are located in regions 40 and the cutters of the third type are location in a region 42.

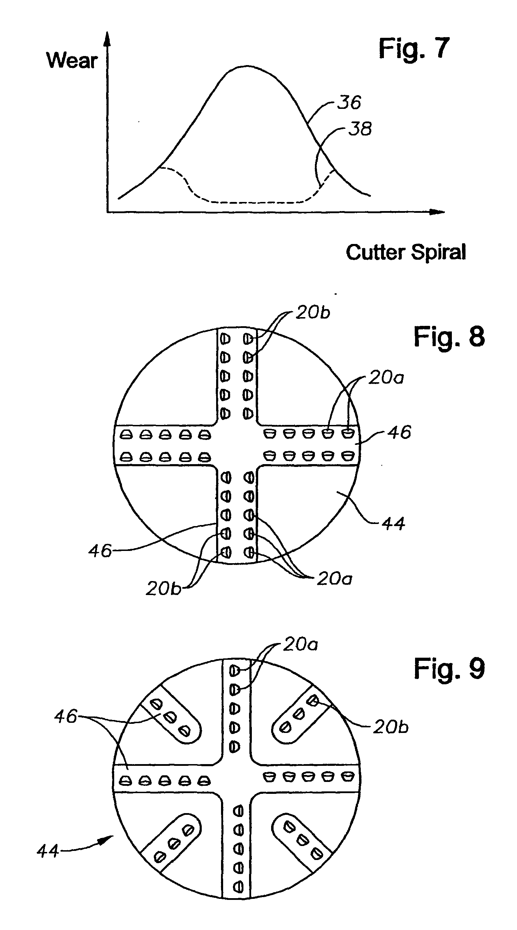

In the profiles of Figures 4 to 6, the use of cutters 20b of the second type, and in Figure 6 the use of cutters of the third type, serves to flatten the profile, increasing the uniformity with which the cutters on the bit wear, thereby permitting the working life of the bit to be increased. Figure 7 illustrates an alternative profile for a bit where the region which conventionally would have the highest wear rate has a lower wear rate than the remainder of the bit. It is thought that this may be beneficial in providing bits of good stability, directional control, and rate of progress.

In the hereinbefore described manufacturing process for improving wear resistance, as the wear resistance of a cutter improves, its ability to withstand impacts is substantially retained. However, because a thin wear-resistance lip is often desirously formed at the cutting edge cutters of the second and third types, they may be more suitably used cutter locations which are protected against impact. This is because the lip, which is believed to increase drilling efficiency, may become chipped during impact. Figures 8 and 9 illustrate, diagrammatically, two rotary drill bits of the type having a plurality of primary cutters and a plurality of secondary cutters, the secondary cutters being protected, at least to some extend, against chippage of the lip by the presence of the primary cutters.

In Figure 8, the drill bit 44 defines a plurality of blades 46, each blade 46 having mounted thereon a plurality of cutters 20. The cutters 20 are arranged in two rows 48, 50 on each blade 46. The first row 48 comprises a row of primary cutters 20a of the first type. The second row 50 comprises secondary cutters 20b of the second type. The secondary cutters are each provided immediately behind an associated primary cutter, and so are protected by the primary cutters from impacts.

The arrangement of Figure 9 differs from that of Figure 8 in that the secondary cutters are mounted upon separate blades from the primary cutters.

It will be appreciated that, in order to provide a bit of good abrasion resistance and good impact resistance, it may in some circumstances be desirable to position some cutters of the first type within the regions 40, 42 of Figures 4 to 7 to protect the cutters of the second type from lip chippage.

## Claims

1. A method for designing a fixed cutter rotary drill bit having at least one cutter of a first type of a relatively low abrasion resistance and at least one cutter of a second type of a relatively high abrasion resistance, the method comprising determining a layout of cutter locations in which cutters (20) are to be positioned upon a bit body, determining the likely wear rate for at least the cutters (20) provided in some of the cutter locations and using the determined likely wear rates to determine whether to mount a cutter of the first type (20a) or a cutter of the second type (20b) in each cutter location, wherein the first type of cutters has substantially the same impact toughness as the second type of cutters.

2. A method according to Claim 1, wherein the cutters of the second type (20b) each comprise a table (22) of polycrystalline diamond bonded to a substrate (24), the table (22) of polycrystalline diamond defining a matrix of interstices (28) containing a catalysing material, the interstices (28) of the matrix located within a volume close to a working surface of the cutter being substantially free of catalysing material (30).

3. A method according to Claim 2, wherein the volume close to the working surface extends to a depth of at least about 0.25mm from the working surface.

4. A method according to Claim 3, wherein the volume close to the working surface extends to a depth of at least about 0.5mm from the working surface.

5. A method of designing a fixed cutter rotary drill bit having at least one cutter of a first type having a relatively low abrasion resistance and at least one cutter of a second type having a relatively high abrasion resistance, the method comprising determining a layout of cutter locations in which cutters (20) are to be positioned upon a bit body, determining a likely wear rate for at least the cutters (20) provided at some of the cutter locations, selecting a desired wear profile for the bit, and using the determined likely wear rates to determine the abrasion resistance of the cutter to be mounted at each cutter location to achieve the desired wear profile, wherein all the cutters have substantially the same impact toughness.

6. A method according to Claim 5, wherein the desired wear profile is of generally flat form.

7. A method according to Claim 5, wherein the desired wear profile includes a region of relatively low wear rate bounded by regions of higher wear rates.

## Patentansprüche

1. Verfahren zum Entwerfen eines Rotary-Bohrmeißels mit feststehenden Schneiden, der wenigstens eine Schneide einer ersten Art mit einer verhältnismäßig niedrigen Abriebbeständigkeit und wenigstens eine Schneide einer zweiten Art mit einer verhältnismäßig hohen Abriebbeständigkeit hat, wobei das Verfahren umfaßt, eine Auslegung von Schneidenpositionen zu bestimmen, in denen Schneiden (20) auf einem Meißelkörper anzuordnen sind, die wahrscheinliche Abriebgeschwindigkeit für wenigstens die Schneiden (20) zu bestimmen, die in einigen der Schneidenpositionen bereitgestellt werden, und Verwenden der bestimmten wahrscheinlichen Abriebgeschwindigkeiten, um zu bestimmen, ob in jeder Schneidenposition eine Schneide der ersten Art (20a) oder eine Schneide der zweiten Art (20b) anzubringen ist, wobei die erste Art von Schneiden wesentlich die gleiche Schlagzähigkeit hat wie die zweite Art von Schneiden.

2. Verfahren nach Anspruch 1, wobei die Schneiden der zweiten Art (20b) jede eine Tafel (22) aus polykristallinem Diamanten, gebunden an ein Substrat (24), umfassen, wobei die Tafel (22) aus polykristallinem Diamanten eine Matrix von Lücken (28) definiert, die ein Katalysatormaterial enthalten, wobei die Lücken (28) der Matrix, die innerhalb eines Raumes nahe einer Arbeitsfläche der Schneide angeordnet sind, wesentlich frei von Katalysatormaterial (30) sind.

3. Verfahren nach Anspruch 2, wobei sich der Raum nahe der Arbeitsfläche bis zu einer Tiefe von wenigstens etwa 0,25 mm von der Arbeitsfläche aus erstreckt.

4. Verfahren nach Anspruch 3, wobei sich der Raum nahe der Arbeitsfläche bis zu einer Tiefe von wenigstens etwa 0,5 mm von der Arbeitsfläche aus erstreckt.

5. Verfahren zum Entwerfen eines Rotary-Bohrmeißels mit feststehenden Schneiden, der wenigstens eine Schneide einer ersten Art, die eine verhältnismäßig niedrige Abriebbeständigkeit hat, und wenigstens eine Schneide einer zweiten Art hat, die eine verhältnismäßig hohe Abriebbeständigkeit hat, wobei das Verfahren umfaßt, eine Auslegung von Schneidenpositionen zu bestimmen, in denen Schneiden (20) auf einem Meißelkörper anzuordnen sind, eine wahrscheinliche Abriebgeschwindigkeit für wenigstens die Schneiden (20) zu bestimmen, die in einigen der Schneidenpositionen bereitgestellt werden, Auswählen eines gewünschten Abriebprofils für den Meißel und Verwenden der bestimmten wahrscheinlichen Abriebgeschwindigkeiten, um die Abriebbeständigkeit der in jeder Schneidenposition anzubringenden Schneide zu bestimmen, um das gewünschte Abriebprofil zu erreichen, wobei alle Schneiden wesentlich die gleiche Schlagzähigkeit haben.

6. Verfahren nach Anspruch 5, wobei das gewünschte Abriebprofil eine allgemein flache Form hat.

7. Verfahren nach Anspruch 5, wobei das gewünschte Abriebprofil einen Bereich mit einer verhältnismäßig geringen Abriebgeschwindigkeit, begrenzt durch Bereiche mit höheren Abriebgeschwindigkeiten, einschließt.

## Revendications

1. Procédé de conception d'un trépan de forage rotatif à éléments de coupe fixes comportant au moins un élément de coupe d'un premier type présentant une résistance à l'abrasion relativement réduite et au moins un élément de coupe d'un deuxième type présentant une résistance à l'abrasion relativement élevée, le procédé comprenant les étapes de détermination d'une disposition des emplacements des éléments de coupe, selon laquelle les éléments de coupe (20) doivent être positionnés sur un corps de trépan, de détermination du taux d'usure probable d'au moins les éléments de coupe (20) agencés dans certains des emplacements des éléments de coupe et d'utilisation des taux d'usure probables déterminés pour déterminer si un élément de coupe de premier type (20a) ou un élément de coupe du deuxième type (20b) doit être monté dans chaque emplacement des éléments de coupe, le premier type d'éléments de coupe présentant pratiquement la même résistance à l'impact que le deuxième type d'éléments de coupe.

2. Procédé selon la revendication 1, dans lequel les éléments de coupe du deuxième type (20b) comprennent chacun une table (22) de diamant polycristallin reliée à un substrat (24), la table (22) de diamant polycristallin définissant une matrice d'interstices (28) contenant un matériau catalyseur, les interstices (28) de la matrice agencés dans un volume proche d'une surface de travail de l'élément de coupe étant pratiquement exempts de matériau catalyseur (30).

3. Procédé selon la revendication 2, dans lequel le volume proche de la surface de travail s'étend à une profondeur d'au moins environ 0,25 mm à partir de la surface de travail.

4. Procédé selon la revendication 3, dans lequel le volume proche de la surface de travail s'étend à une profondeur d'au moins environ 0,5 mm à partir de la surface de travail.

5. Procédé de conception d'un trépan de forage rotatif à éléments de coupe fixes comportant au moins un élément de coupe d'un premier type présentant une résistance à l'abrasion relativement réduite et au moins un élément de coupe d'un deuxième type présentant une résistance à l'abrasion relativement élevée, le procédé comprenant les étapes de détermination d'une disposition des emplacements des éléments de coupe, selon laquelle les éléments de coupe (20) doivent être positionnés sur un corps de trépan, de détermination du taux d'usure probable d'au moins les éléments de coupe (20) agencés dans certains des emplacements des éléments de coupe, de sélection d'un profil d'usure voulu du trépan et d'utilisation des taux d'usure probables déterminés pour déterminer la résistance à l'abrasion de l'élément de coupe devant être monté au niveau de chaque emplacement des éléments de coupe pour assurer le profil d'usure voulu, tous les éléments de coupe présentant pratiquement la même résistance à l'impact.

6. Procédé selon la revendication 5, dans lequel le profil d'usure voulu a une forme généralement plate.

7. Procédé selon la revendication 5, dans lequel le profil d'usure voulu englobe une région à taux d'usure relativement réduit délimitée par des régions à taux d'usure accrus.
